# EUROPEAN PATENT APPLICATION

(11) **EP 1 464 884 A1**
(43) Date of publication of application: **06.10.2004**
(21) Application number: 03700519.6
(22) Date of filing: 10.01.2003
(51) Int. Cl.: F16L 47/02, F16L 11/08, B29C 65/02

(54) **CONNECTION METHOD AND CONNECTION STRUCTURE OF PLASTIC PIPE**

(30) Priority: 11.01.2002 JP 2002004671; 11.01.2002 JP 2002004673
(71) Applicant: Mesco, Inc., Tokyo 130-8531 (JP); Sakai Sangyo Co., Ltd., Shimada-shi, Shizuoka 427-8512 (JP)
(72) Inventor: TSUNAGA, Masayuki c/o MESCO Inc., Oita-shi, Oita 870-0011 (JP); SATOH, Masahiro c/o MESCO Inc., Oita-shi, Oita 870-0011 (JP); KAWANO, Shoji c/o MESCO Inc., Oita-shi, Oita 870-0011 (JP); SAKAI, Rokuro c/o Sakai Sangyo Co., Ltd., Shimada-shi, Shizuoka 427-8512 (JP); HOSODA, Eiji c/o Sakai Sangyo Co., Ltd., Shimada-shi, Shizuoka 427-8512 (JP); SUMIDA, Atsushi c/o DU PONT-TORAY CO., LTD., Chuo-ku, Tokyo 103-0023 (JP); YASHIRO, Hideki c/o DU PONT-TORAY CO., LTD., Chuo-ku, Tokyo 103-0023 (JP)
(74) Representative: Sturt, Clifford Mark
(86) International application number: PCT/JP2003/000154
(87) International publication number: WO 2003/060372

(57) **Abstract**

Methods for connecting, to each other, the ends of plastic pipes formed by inserting fiber-reinforced material between tubular inner and outer layers formed of resin, the method for connecting, to each other, the ends of the plastic pipes having spirally wound fiber-reinforced material to expose the inner layer, butt-fusing the inner layers to each other, desirably, re-winding the unwound fiber-reinforced material on the outer peripheral surfaces of the inner layers, and winding another fiber-reinforced material on the outer peripheral surfaces thereof so as to lie across the ends of both pipes; the method for connecting, to each other, the ends of the plastic pipes axially arranged fiber-reinforced material inserted therein comprising the steps of cutting off the outer layers from both ends of the pipes, inversing the fiber-reinforced material to expose the inner layers, butt-fusing the inner layers to each other, returning the fiber-reinforced material again to the outer peripheral surfaces of the inner layers, and disposing another fiber-reinforced material on the outer peripheral surfaces thereof so as to lie across the ends of both pipes.

## Description

### BACKGROUND OF THE INVENTION

### Technical Field

This invention relates to connection methods and connection structures of plastic pipes, and more particularly, the invention relates to connection methods and connection structures for tightly connecting, to each other, the ends of two plastic pipes reinforced with fiber-reinforced materials.

### Detailed Description of the Prior Art

Since a plastic pipe is advantageous in various points compared with a metallic pipe, it is widely used as a means for transporting fluids. For example, it is excellent in workability because it is lighter than a metallic pipe; it is excellent in corrosion resistance because it is resistant to being oxidized; and it is excellent in earthquake proof because it is flexible. Moreover, a pipe manufactured at a factory can continuously be wound on a reel because it is flexible compared with a metallic pipe, and its long distance construction is possible in the seamless state by transporting the reel to a working site.

However, for example, in the case of a large diameter plastic pipe not smaller than 50cm, it cannot be wound on a reel, therefore, it has to be transported to a working site in the cut-off state of 5 to 20 m long pieces, and they have to be fused to each other one by one at the pipe ends. However, in the case of the plastic pipe reinforced with a fiber-reinforced material, the joint parts sometimes lack tensile strength if they are only fused to each other at the pipe ends. Moreover, the sealing ability has sometimes been deteriorated because the fiber-reinforced material lies in the butt-fused parts.

### SUMMARY OF THE INVENTION

The object of the present invention is to provide methods and structures for connecting, to each other, the ends of plastic pipes formed by inserting fiber-reinforced material between tubular inner and outer layers formed by resin in which the strength of a connection part can be made equal to or better than that of the pipes and also a favorable sealing ability can be achieved.

In order to achieve the above object, the following four kinds of methods for connecting plastic pipes will be provided according to the methods for inserting the fiber-reinforced material in the plastic pipes. Among these, the first to third connection methods each are to be applied to the plastic pipes in which the fiber-reinforced material is spirally inserted between the tubular inner and outer layers, and the fourth connection method is to be applied to the plastic pipe in which the fiber-reinforced material is inserted so as to be arranged substantially in the axial direction of the pipe.

The above-mentioned first connection method of plastic pipes is a method for connecting, to each other, ends of the plastic pipes having a spirally wound fiber-reinforced material inserted between tubular inner and outer layers formed of resin, and is characterized by comprising the steps of cutting off the outer layer from the ends of both pipes, unwinding the fiber-reinforced material to expose the inner layer, butt-fusing the inner layer to each other, re-winding the unwound fiber-reinforced material on the outer peripheral surfaces of the inner layers, and winding spirally or perpendicularly to a pipe axis another fiber-reinforced material on the outer peripheral surfaces thereof so as to lie across the ends of both pipes.

The above-mentioned second connection method of plastic pipes is a method for connecting, to each other, ends of the plastic pipes having a spirally wound fiber-reinforced material inserted between tubular inner and outer layers formed of resin, and is characterized by comprising the steps of cutting off the outer layer and the fiber-reinforced material from the ends of both pipes to expose the inner layer, butt-fusing the inner layer to each other, and winding spirally or perpendicularly to a pipe axis another belt-like fiber-reinforced material on the outer peripheral surfaces thereof so as to lie across the ends of both pipes.

The above-mentioned third connection method of plastic pipes is a method for connecting, to each other, ends of the plastic pipes having a spirally wound fiber-reinforced material inserted between tubular inner and outer layers formed of resin, and is characterized by comprising the steps of cutting off the outer layer from ends of both pipes, unwinding the fiber-reinforced material to expose the inner layer, butt-fusing the inner layers to each other, and rewinding the unwound fiber-reinforced material on the outer peripheral surfaces of the inner layers.

The connection structure of plastic pipes obtained from the above-mentioned first and second connection methods in accordance with the present invention is a structure for connecting, to each other, the ends of the plastic pipes having spirally wound fiber-reinforced material inserted between the tubular inner and outer layers formed of resin, and is characterized in comprising the structure of cutting off the outer layers from the ends of both pipes, butt-fusing the inner layers to each other, and winding spirally or perpendicularly to the pipe axis another fiber-reinforced material on the outer peripheral surfaces of the butt-fused inner layers in the presence of the fiber-reinforced material or in the cut-off state thereof so as to lie across the ends of both pipes.

A connection structure of plastic pipes obtained from the above-mentioned third connection method in accordance with the present invention is the structure for connecting, to each other, ends of the plastic pipes having a spirally wound fiber-reinforced material inserted between tubular inner and outer layers formed of resin, and is characterized by comprising the structure of cutting off the outer layers from the ends of both pipes, butt-fusing the inner layers to each other, and spirally winding the fiber-reinforced material on the outer peripheral surfaces of the butt-fused inner layers.

As described above, the outer layers are cut off from the ends of the plastic pipes and, at the same time, the inner layers are exposed by unwinding the fiber-reinforced material or cutting it off. The inner layers are then butt-fused to each other with the fiber-reinforced material kept away therefrom, therefore, the pipes can surely be sealed without letting the fiber-reinforced material mix in the butt-fused part. Further, in the first and second connection methods, the inner layers are butt-fused to each other, and then another fiber-reinforced material is wound spirally or perpendicularly to the direction of the pipe axis so as to lie across the ends of both pipes. Therefore, the connection part can be provided with strength equal to or more than that of the main body part (unconnected part) of the plastic pipe. In the third connection method, although another fiber-reinforced material is not wound, the reinforcement is sufficient mainly in the direction of the outer peripheral surfaces.

More preferably, in any of the first to the third connection methods, the outer peripheral surface of the above-mentioned outer reinforced layer is covered with a resin layer, and this resin layer coating can further improve the strength and sealing, and can make the appearance favorable.

The above-mentioned fourth connection method of plastic pipes is a method for connecting, to each other, ends of the plastic pipes having a fiber-reinforced material inserted between tubular inner and outer layers formed of resin so that the material is arranged substantially in an axial direction of the pipe, and is characterized by comprising the steps of cutting off the outer layer from the ends of both pipes, inverting the fiber-reinforced material to expose the inner layer, butt-fusing the inner layers to each other, and then returning the inverted fiber-reinforced material again to the outer peripheral surfaces of the inner layers, and when returning the fiber-reinforced material again at least either on the inner or the outer side thereof, arranging a sheet layer or a resin plate, in which a fiber-reinforced material impregnated with resin is arranged in the axial direction, so that the sheet layer or the resin plate lies across the ends of both pipes.

A connection structure of plastic pipes obtained from this fourth connection method in accordance with the present invention is the structure for connecting, to each other, ends of the plastic pipes having a spirally wound fiber-reinforced material inserted between tubular inner and outer layers formed of resin so that the material is arranged substantially in an axial direction of the pipe, and is characterized by comprising the structure of cutting off the outer layers from the ends of both pipes, butt-fusing the inner layers to each other, and at least either on the inner or the outer side of the fiber-reinforced material, arranging a sheet layer or a resin plate, in which a fiber-reinforced material impregnated with resin is arranged in the axial direction, so that the sheet layer or the resin plate lies across the ends of both pipes.

As described above, the outer layers are cut off from the ends of the plastic pipes to be connected; the fiber-reinforced material is inverted to expose the inner layers; and only the inner layers are butt-fused to each other with the fiber-reinforced material kept away, therefore, the butt-fused part can surely be sealed without the fiber-reinforced material mixed therein. Further, when returning the inverted fiber-reinforced material again to the outer peripheral surfaces of the inner layers after having butt-fused the inner layers to each other, a sheet layer or a resin plate, in which the fiber-reinforced material impregnated with resin is aligned in the axial direction of the pipes to at least either on the inner or the outer layer is arranged so as to lie across the ends of both pipes. Therefore, the connection part is provided with strength equal to or more than that of the main body part (unconnected part) of the plastic pipes.

More preferably, the outermost peripheral surface of the connection part is covered with a resin layer, and the coating with this resin layer further can improve the strength and sealing of the connection part and can also improve the appearance.

### BRIEF DESCRIPTION OF THE DRAWINGS

Fig 1 is a side view partly showing the cross-section of the ends of plastic pipes before connection to which the first connection method of the present invention is to be applied.
Fig.2 is a side view partly showing the cross-section of the state in which the ends of the pipes have been treated after the step at Fig.1.
Fig.3 is a side view showing the state in which the inner layers are butt-fused to each other after the step at Fig.2.
Fig.4 is a side view showing the state in which the separated fiber-reinforced material is returned to the original position after the step at Fig.3.
Fig.5 is a side view showing the state in which another fiber-reinforced material is spirally wound after the step at Fig.4.
Fig.6 is a side view showing the state in which the winding of another fiber-reinforced material at the step of Fig.5 has been completed.
Fig.7 is a side view showing the state in which the fiber-reinforced material is covered with a resin layer after the step at Fig.6.
Fig.8 is a side view partly showing the cross-section of the pipe end parts of plastic pipes before connection to which the fourth connection method of the present invention is to be applied.
Fig.9 is a side view partly showing the state in which the ends have partly been treated after the step at Fig.8.
Fig.10 is a side view showing the state in which the inner layers are butt-fused to each other after the step at Fig.9.
Fig.11 is a side view showing the state in which the first sheet layer is arranged on the surfaces of the butt-fused inner layers after the step at Fig.10.
Fig.12 is a side view showing the state in which the inverted fiber-reinforced material is returned to the original place.
Fig. 13 is a side view showing the state in which the second sheet layer is arranged on the outer peripheral surfaces of the inverted fiber-reinforced material after the step at Fig.12.
Fig.14 is a side view showing the state in which the fiber-reinforced material is covered with a resin layer after the step at Fig.13.
Fig.15 is a perspective view partly showing the cross-section of an example of the fiber-reinforced material to be used for the present invention.
Fig.16 is a perspective view partly showing the cross-section of an example of the fiber-reinforced material to be used for the present invention.

### DETAILED DESCRIPTION OF THE PREFERRED EMBODIMENT

In the present invention, the plastic pipes for connecting the ends thereof to each other are formed by inserting a fiber-reinforced material between the tubular inner and outer layers formed of resin. There are two kinds of methods for inserting the fiber-reinforced material; one is for reinforcing the pipes in the radial direction of the pipes by spirally winding the fiber-reinforced material on the outer peripheral surfaces of the inner layers, and the other is for reinforcing the pipes mainly in the axial direction of the pipes by arranging the fiber-reinforced material substantially in parallel to the axial direction of the pipes.

In the case of the former plastic pipes, the spirally inserted fiber-reinforced material bears the inner pressure in the radial direction of the pipes, and the reinforcement is utilized mainly for piping on and under ground, especially effective as a pipe for high pressure transportation of liquids. Although the spiral angle θ₁ of the fiber-reinforced material to the axial direction of the pipe is not specially restricted, the angle is preferred to be 50 degrees or larger and less than 90 degrees. Moreover, in the case of the latter plastic pipes, the fiber-reinforced material bears the tensile strength in the axial direction of the pipes, and it is effective mainly as a transportation line for drawing up deep water from the sea 200 m or deeper. Here, the arrangement of the fiber-reinforced material substantially parallel to the axial direction of the pipes means that the fiber-reinforced material is arranged in the angular range of 0 to 30 degrees to the axial direction of the pipe.

In the case of connecting, to each other, the ends of two plastic pipes with the fiber-reinforced material spirally inserted as the former plastic pipes, the pipe connection is performed by the aforementioned first and second methods.

These connection methods are firstly through cutting off the outer layers from the ends of the plastic pipes by a certain length in the axial direction of the pipes. Further, the fiber-reinforced material parts spirally wound on the areas where the outer layers are removed are separated so as to be re-wound or cut off to expose the inner layer end parts. It can be selected from the viewpoint of workability whether to re-wind or cut off the fiber-reinforced material, and there is no special difference between the two. However, preferably, the former re-winding is recommended in a case of a nominal diameter of 150 mm or less, while the cutting-off is recommended in a case of a nominal diameter exceeding 150 mm.

When the inner layers of both pipe ends have been exposed, each inner layer end part is melted and butt-fused by press-contacting them to each other. Since the inner layer end parts are exposed and butt-fused with the fiber-reinforced material kept away as described above, both plastic pipes can be butt-fused so as to have a favorable sealing ability without getting the fiber-reinforced material mixed in the butt-fused part.

In the case of re-winding the fiber-reinforced material as described above after having butt-fused the inner layer end parts to each other, the fiber-reinforced material is wound again on the outer peripheral surfaces of the original inner layers. Moreover, in the case of cutting off the fiber-reinforced material, the plastic pipes are left exposed.

In the case of the third connection method, the connection work is once ended when the fiber-reinforced material has been re-wound. However, in the cases of the first and second connection methods, the outer reinforcing layer is formed, as described above, by spirally winding another belt-like fiber-reinforced material on the outer peripheral surfaces wound with the fiber-reinforced material on the original positions of the inner layer outer peripheral surfaces or the inner layer outer peripheral surfaces left exposed so that it lies across both pipe ends, or winding it thereon in the direction almost perpendicular to the pipe axis so that it similarly lies across both pipe ends. Thus, by spirally winding another fiber-reinforced material so that it lies across both pipe ends or winding it in the direction perpendicular to the pipe axis, the butt-fused connection part of the inner layer end parts can be provided with strength equal to or larger than that of the main body part (unconnected part) of the plastic pipes.

The outer peripheral surfaces of the outer reinforcing layer formed of another fiber-reinforced material thus wound with the outermost surfaces is recommended to be covered with a resin layer. By coating the outer reinforcing layer with the resin layer, the connection part of the inner layers butt-fused to each other can be improved in strength and sealing ability, and can also be improved in appearance.

Methods for providing the resin layer are through fusing a resin pipe or a resin tube by heating with a heater after having covered the periphery of the outer reinforcing layer therewith, or bonding it with an adhesive, or making it closely contact by thermal contraction, and so on. Moreover, a resin tape may spirally be wound thereon and bonded with an adhesive, or it may be fused by heating.

Although the separate fiber-reinforced material to be used for the outer peripheral reinforcing layer is not restricted within special kinds, preferably, the same material as the fiber-reinforced material spirally inserted for reinforcing the plastic pipe main body may be used. Although a spiral angle θ₂ to the axial direction of this fiber-reinforced material is not specially limited, it is preferred to be not less than 50 degrees and not exceeding 90 degrees. Namely, the winding direction of the fiber-reinforced material for reinforcing the outer peripheral surfaces may be in a spiral form or perpendicular to the axis of the pipe.

Moreover, it is not always necessary to make the spiral angle θ₂ of the above-mentioned fiber-reinforced material as same as the spiral angle **θ**₁ of the fiber-reinforced material for reinforcing the plastic pipe main body, both angles may be different from each other. Moreover, their spiral directions do not need to be the same, but they may be spiraled in the opposite directions so as to cross each other.

In the case of connecting, to each other, the pipe ends of two plastic pipes in which the latter fiber-reinforced material is inserted so as to align substantially in the axial direction of the pipe, the connection is performed by the aforementioned fourth connection method. In this connection method, the outer layers are firstly removed by a certain length from the ends of the plastic pipes in the axial direction of the pipes. Further, the fiber-reinforced material parts covering the areas from which the outer layers are removed are inverted so as to be separated, to expose the inner layer end parts.

When the inner layers of both pipe ends are exposed, the end parts of each inner layer are melted and butt-fused to each other by press-contacting to each other. Since the inner layer end parts are thus exposed and butt-fused to each other with the fiber-reinforced materials inverted, the pipes can be fused to have a favorable sealing ability without getting the fiber-reinforced material mixed in the fused part.

After having butt-fused the inner layer end parts to each other, the above-mentioned fiber-reinforced materials left inverted are returned so as to cover the outer peripheral surfaces of the original inner layers. When the fiber-reinforced materials are thus returned to the original positions, a sheet layer in which the fiber-reinforced material impregnated with a resin is aligned substantially in the axial direction of the pipes is arranged at least either on the inner layer surfaces before returned or on the outside of the fiber-reinforced material after returned, so as to lie across the ends of both pipes. Thus, the sheet layer may be arranged at least either on the inside or the outside of the fiber-reinforced material, however, the sheet layer is preferably arranged on both sides depending on the usage of the plastic pipe.

Here, the fact that the fiber-reinforced material forming the sheet layer is substantially in the axial direction of the pipe means that the longitudinal direction of the fiber of the fiber-reinforced material is in the angular range of 0 to 30 degrees to the axial direction of the pipe. The align direction of the fiber-reinforced material of this sheet layer is preferably the same as that of the fiber-reinforced material returned from the inverted state, both directions may be different from each other as long as each arrangement is within the range of 0 to 30 degrees to the axial direction of the pipe.

The fused connection part of the inner layer end parts can be provided with strength equal to or larger than that of the plastic pipe main body part (unconnected part) by arranging the sheet layer at least either on the inside or the outside of the fiber-reinforced material thus returned from the inverted state.

Although the above-mentioned sheet layer is formed at a working site while impregnating the fiber-reinforced material with a resin, instead of this, a prepreg sheet pre-impregnated with an uncured resin may be used. Or one or a plurality of resin plates may be used so as to be assembled. The resin plates in this case are preferably used which are curvedly pre-formed so as to run along the cylindrical surface of the pipe. In the cases of the prepreg sheet and the resin plates, they are tacked and then they are thermally cured in the state or heat-fused by heat treatment.

When the reinforcement has been completed by placing the sheet layer impregnated with a resin or the resin plate as described above, the outermost peripheral surface is preferably covered with a resin layer. The coating with the resin layer improves the connection part of the inner layers butt-fused to each other, and also improves the appearance as well as in strength and a sealing ability.

Methods for providing the resin layer are through fusing a resin pipe or a resin tube by heating with a heater after having covered the periphery of the outer reinforcing layer therewith, or bonding it with an adhesive, or making it closely contact by thermal contraction, and so on. Moreover, a resin tape may spirally be wound thereon and bonded with an adhesive, or it may be fused by heating.

In the present invention, it is preferable to use a thermoplastic resin capable of being fused by heat as a resin for forming the inner layers, the outer layers, and the resin layer of the plastic pipe. The thermoplastic resin is not specially restricted in the kinds; however, for example, polyethylene, polypropylene, polyamide, polyester, and so on can be used. Among these, polyethylene is preferable.

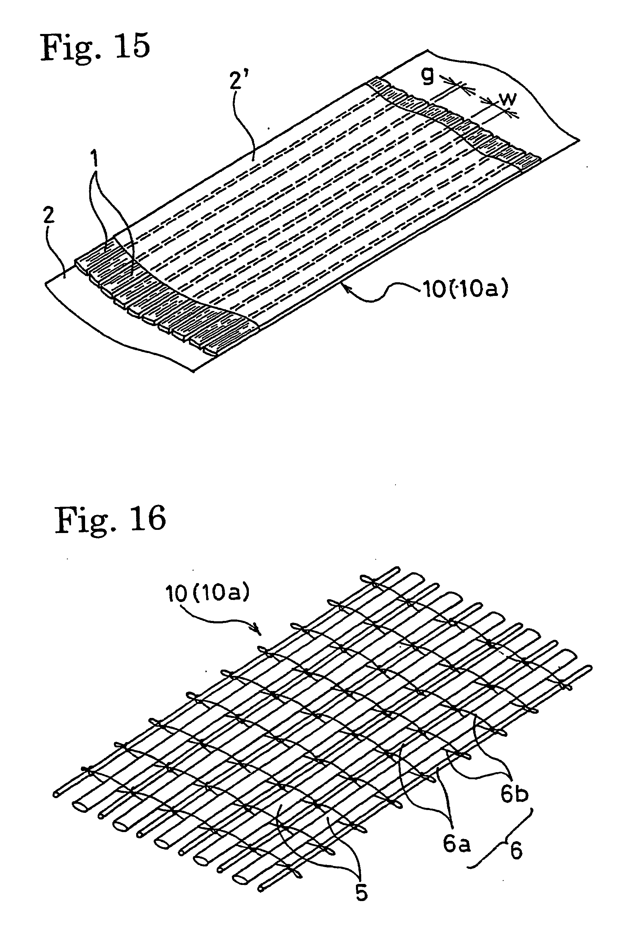

In the present invention, a bundle of continuous fiber filaments is preferably used as the fiber-reinforced material to be used for fiber-reinforced material inserted between the inner and outer layers of the plastic pipe, and the fiber-reinforced material used for the sheet layer inserted for reinforcement. For example, as shown in Fig.15, a plurality of bundles of fiber-filaments arranged in parallel and supported in a plane form by a holding sheet is preferable. As shown in Fig.16, the holding sheet may be a mesh sheet or a net sheet where the warp and weft are engaged in rough density, and also a synthetic resin film or non-woven fabric of synthetic fiber or the like coated with an adhesive on one side. The holding sheet in this case may be single-sided but may be double-sided so as to hold the bundles of fiber filaments from both sides for the use.

The fiber for forming the fiber-reinforced material is not specially restricted in the kinds as long as it has a reinforcement effect. For example, para-series all aromatic polyamide fiber, poly-P-phenylene-benzvisoxasole (PBO fiber) , liquid crystalline polyester fiber, carbon fiber, glass fiber, or the like can be mentioned, and among these, para-series all aromatic polyamide fiber is especially preferable.

Moreover, thermoplastic resin is used as the resin to be impregnated into the above-mentioned sheet layer and prepreg sheet, and as the thermoplastic resin, for example, epoxy resin, unsaturated polyester resin, phenol resin, or the like can be used. These resins are uncured when worked, but are cured by heat treatment after the work.

The diameters (nominal diameters) of the plastic pipes to which the connection methods of the present invention are applied are not specially restricted. However, it is preferred to apply the methods to plastic pipes of large nominal diameters which are difficult to be continuously wound on a reel, and it is especially preferable to apply the connection methods to the plastic pipes with diameters of 50 cm or larger.

In the following, the connection methods of the present invention will be explained in details referring to the drawings.

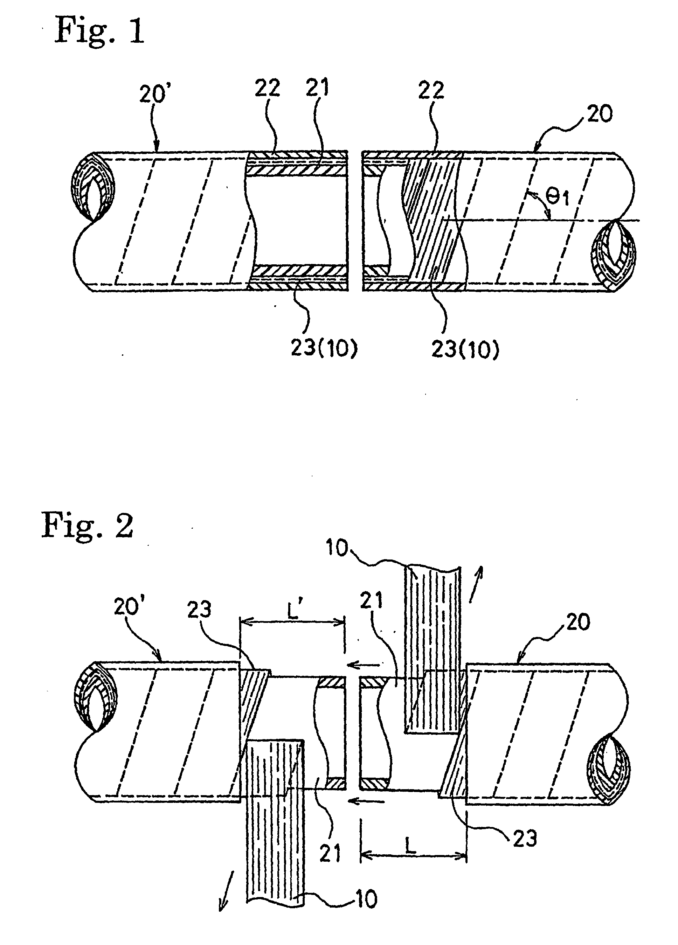

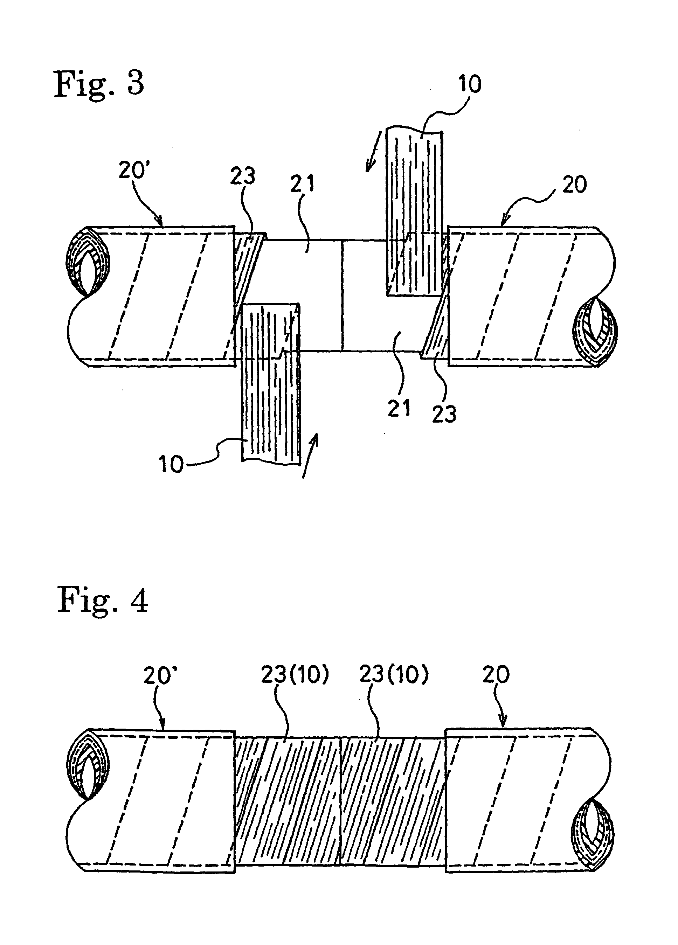

Fig.1 through Fig.7 illustrate the first connection method of the present invention as an example according to the steps.

In Fig.1, the reference numerals 20, 20' are the plastic pipes to be connected to each other at the ends of both pipes. In these plastic pipes 20, 20', the inner layer 21 and the outer layer 22 are formed of a resin in a tubular form, and are coaxially arranged. A belt-like fiber-reinforced material 10 is spirally inserted in the ring form space between this inner layer 21 and the outer layer 22 to form a reinforcing layer 23. The spiral angle θ₁ of this fiber-reinforced material 10 to the axial direction of the pipe is not less than 50 degrees and nor exceeding 90 degrees.

The method for connecting the ends of the two plastic pipes 20, 20' to each other is, firstly as shown in Fig.2, through cutting off the outer layers 22, 22 from each pipe end of the plastic pipes 20, 20' by certain lengths L, L', respectively. The fiber-reinforced material 10 having been wound on the area from which this outer layer 22 was cut off is re-wound so as to be separated from the surface of the inner layer 21, to expose the inner layer 21.

Although the cut-off lengths L, L' of the outer layer 22 are not specially limited, the lengths will do as long as they expose the inner layer 21 long enough to keep the fiber-reinforced material 10 away from the fusing part at the time of butt-fusing. Moreover, the lengths L, L' may be the same or different from each other.

Following the above, the end parts of the inner layers 21, 21 exposed as described above are melted, respectively, and then the end parts are butt-fused to each other as shown in Fig.3 by pressing either of them to the other or butt-pressing both ends to each other at the same time. Thus, when carrying out the butt-fusing, the fiber-reinforced materials 10 are arranged so as to be prevented from entering the end parts by bringing the end parts of the inner layers 21 into the exposed state (naked state), therefore, fusion excellent in a sealing ability can be carried out.

Moreover, the example in the drawing has illustrated the case in which the fiber-reinforced material 10 is re-wound so as to be separated from the inner layers 21, however, the separated fiber-reinforced material 10 may be cut off. The case of thus cutting off the fiber-reinforced materials corresponds to the second connection method of the present invention. Especially, in the case of pipes of large diameters, the workability is improved by cutting off the fiber-reinforced materials 10 as in this second connection method.

When the ends of the inner layers 21, 21 have been butt-fused, the re-wound fiber-reinforced materials 10 are wound again on the outer peripheral surfaces of the inner layers 21, 21 to bring the outer peripheral surfaces of the inner layers 21, 21 into the covered state again as shown in Fig.4.

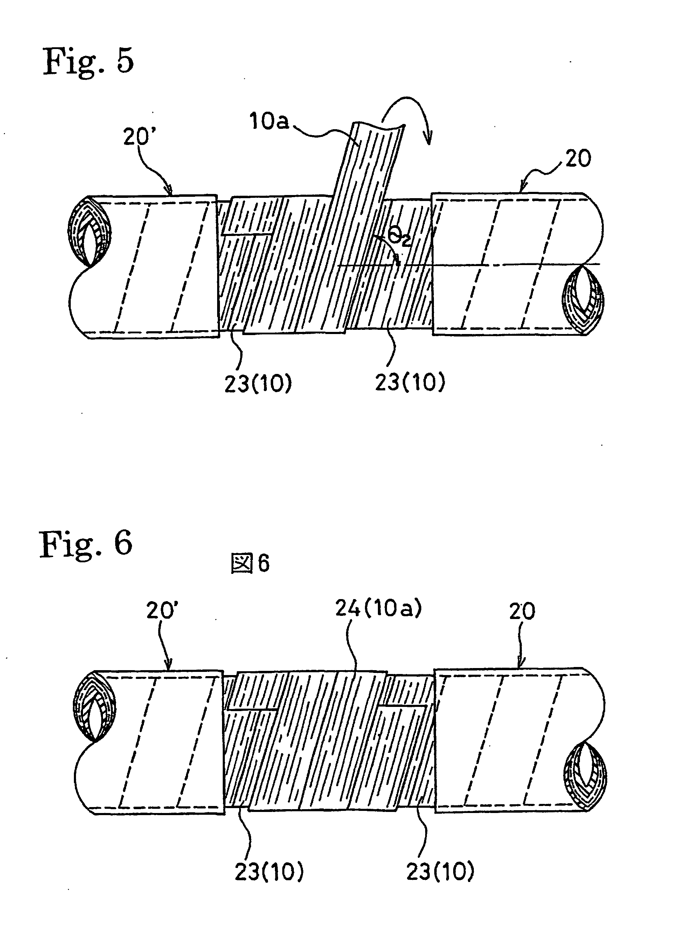

Following this, as shown in Fig.6, an outside reinforcing layer 24 is formed by spirally winding another fiber-reinforced material 10a, as shown in Fig.5, on the outer peripheral surfaces of the reinforcing layers 23, 23 on which the fiber-reinforced materials 10, 10 have been returned and wound, also so that another fiber-reinforced material lies across both pipe ends on both sides of the butt-fused part. This outside reinforcing layer 24 provides the connection part with strength under internal pressure equal to or higher than that of the plastic pipes 20, 20'.

A winding angle θ₂ of the fiber-reinforced material 10a to the axial direction of the pipe is made to be not less than 50 degrees and not exceeding 90 degrees. Namely, the fiber-reinforced material 10a may be wound not only spirally but also substantially in the direction perpendicular to the pipe axis. Moreover, in the case of spiral winding, it does not matter whether the spiral direction of the fiber-reinforced material 10a is the same as or opposite to that of the fiber-reinforced materials 10. Thus, when the outside reinforcing layer 24 is formed by winding the fiber-reinforced material 10a, both end parts of the fiber-reinforced material 10a may be bonded to the inside reinforcing layers 23 with an adhesive at or may be fixed thereto with metal fittings. Moreover, the number of the winding layers of the fiber-reinforced material 10a for the outside reinforcing layer 24 is not limited to a single layer but may be doubled or more as necessary.

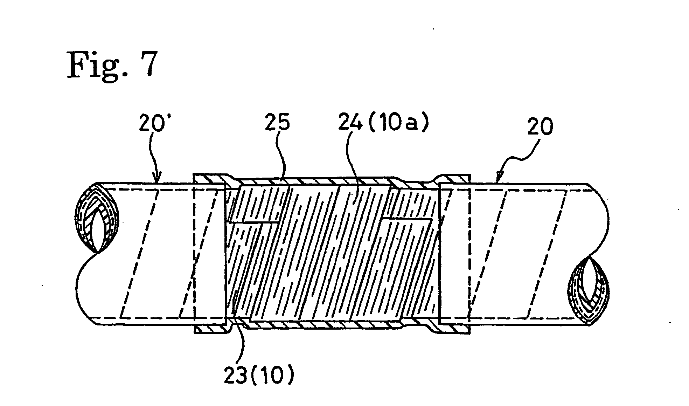

The connection part of the pipe ends of the two plastic pipes 20, 20' is preferably covered with a resin layer 25 on the outer peripheral surface of the outside reinforcing layer 24 as shown in Fig.7. Although the resin layer 25 is not specially restricted in shape, for example, the resin layer 25 is preferably covered with a resin tube or a resin pipe, or spirally wound with a resin tape. The adhesion may be performed by fusion or by using an adhesive. In the case of using the former resin tube and resin pipe, close contact can be obtained by heat contraction.

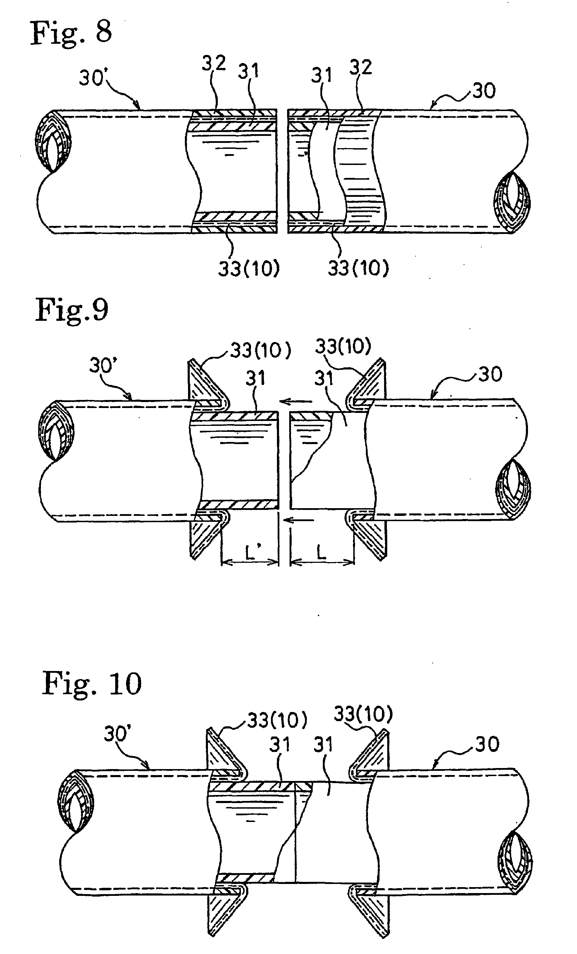

Next, Fig.8 through Fig.14 illustrate an example of the fourth connection method according to the steps.

In Fig.8, the reference numerals 30, 30' are the plastic pipes to be connected to each other. These plastic pipes 30, 30' have respective inner layers 31 and outer layers 32 formed in a tubular form from a resin, and they are coaxially arranged. A sheet-like fiber-reinforced material 10 is inserted between a ring-form space between the inner layer 31 and the outer layer 32 substantially in the axial direction of the pipe to form a reinforcing layer 33. This fiber-reinforced material 10 is aligned in the angular range of 0 to 30 degrees to the axial direction of the pipe.

The method for connecting the ends of the two plastic pipes 30, 30' to each other is, firstly as shown in Fig.9, through cutting off the outer layers 32, 32 from each pipe end of the plastic pipes 30, 30' by certain lengths L, L', respectively. The fiber-reinforced material 10 having covered the area from which this outer 32 layer was cut off is inverted in a trumpet shape so as to be separated from the surface of the inner layer 31, to expose the inner layer 31.

Although the cut-off lengths L, L' of the outer layer 32 are not specially limited, the lengths will do as long as they expose the inner layer 31 long enough to keep the fiber-reinforced material 10 away from the fusing part at the time of butt-fusing. Moreover, the lengths L, L' may be the same or different from each other.

Following the above, the end parts of the inner layers 31, 31 exposed as described above are melted, respectively, and then the end parts are butt-fused to each other as shown in Fig. 10 by pressing either of them to the other or butt-pressing both ends to each other at the same time. Thus, when carrying out the butt-fusing, the fiber-reinforced materials 10 are arranged so as to be prevented from entering the end parts by bringing the end parts of the inner layers 31 into the exposed state (naked state), therefore, fusion excellent in a sealing ability can be carried out.

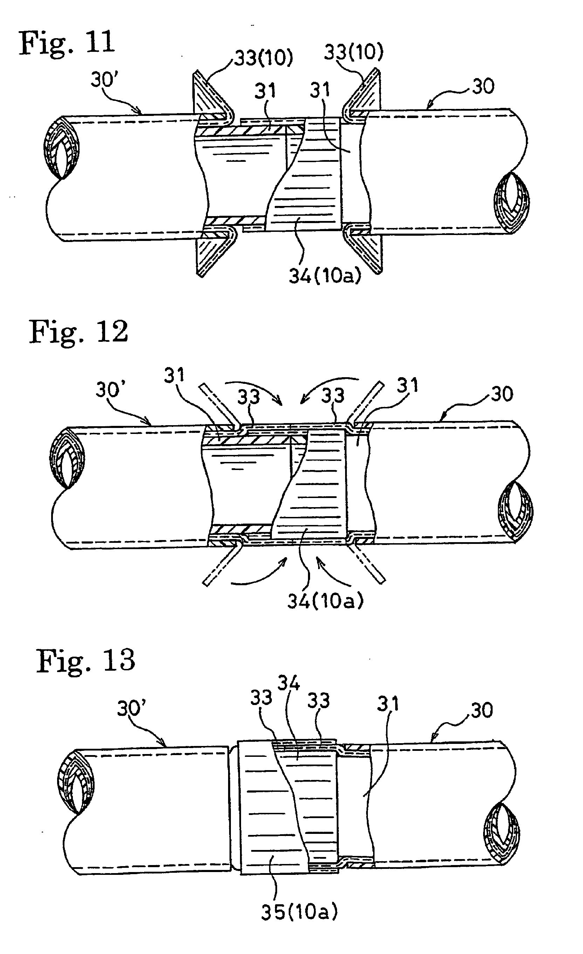

When the butt-fusing of the end parts of the inner layers 31, 31 has been completed, the inverted fiber-reinforced materials 10, 10 are returned again onto the outer peripheral surfaces of the inner layers 21, 21 so as to cover them, however, before performing the returning job, as shown in Fig.11, a sheet layer 34 of fiber-reinforced material 10a impregnated with a resin is arranged on the outer peripheral surface of the mutually butt-fused part of both inner layers 31, 31 so as to lie across both pipe ends. The fiber-reinforced material 10a of the sheet layer 34 is aligned in the axial direction of the pipe within the angular range of 0 to 30 degrees thereto.

Following the above, as shown in Fig.12, the aforementioned inverted fiber-reinforced materials 10, 10 are returned onto the sheet layer 34 so as to cover the outer peripheral surface of the sheet layer 34. Then, as shown in Fig.13 further, the outsides of the fiber-reinforced materials 10, 10 returned as mentioned above are covered with another sheet layer 35. Similarly to the sheet layer 34, the sheet layer 35 is formed of the fiber-reinforced material 10a impregnated with a resin and aligned substantially in the axial direction of the pipe so as to lie across both pie ends. The fiber-reinforced material 10a of this sheet layer 35 is also aligned in the angular range of 0 to 30 degrees to the axial direction of the pipe.

In the present invention, it is not always necessary that the axial direction of the fiber-reinforced material 10a of the sheet layer 35 matches with that of the fiber-reinforced material of the sheet layer 34, but it does not matter whether they are the same or different from each other as long as each of them is within the angular range of 0 to 30 degrees to the respective axial direction of the pipe. Moreover, at least either the sheet layer 34 or the sheet layer 35 has only to be arranged, and it is not always necessary to arrange both of the sheet layers 34, 35 at the same time. In addition, these sheet layers 34, 35 may be replaced with a prepreg sheet or a resin plate.

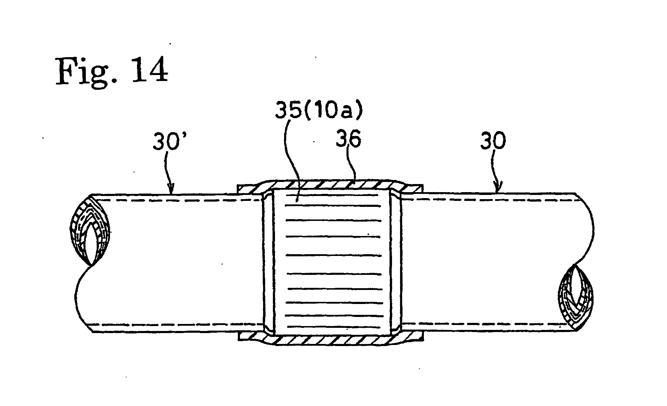

The connection part of both ends of the plastic pipes 30, 31 connected as described above is preferably disposed so as to be covered with a resin layer 36 on the outermost layer as shown in Fig.14. Although the resin layer 36 is not specially restricted in shape, for example, the outermost part is preferably covered with a resin tube or a resin pipe, or spirally wound with a resin tape. The adhesion may be carried out by fusion or an adhesive. In the cases of the former resin tube and resin pipe, close contact by heat contraction can be utilized.

Fig. 15 illustrates the fiber-reinforced materials to be used for the present invention as an example. These fiber-reinforced materials 10, 10a can be used not only as a reinforcing layer for reinforcing the plastic pipe main body, but also as an outside reinforcing layer to be wound on the outer peripheral surfaces of the butt-fused part of both inner layers.

The shown fiber-reinforced material 10 (10a) is formed of a plurality of filament bundles 1 aligned in parallel by letting a gap g lie among them, and is pasted with an adhesive so as to be held between belt-form or tape-form holding sheets 2, 2' in the state of the parallel alignment. A bundle of fiber filaments 1 is soft-twisted 40 times/m or less, and is also made flat so as to have a width w. In order to form the holding sheets 2, 2' used for holding the plurality of these filament bundles 1, non-woven fabric made of a synthetic resin film or a synthetic fiber is used.

Moreover, in the example shown in Fig.15, two sheets are used for the upper and lower holding sheets, however, only a single side holding sheet can be used. Also, as mentioned above, instead of the holding sheets, a plurality of fiber filament bundles aligned in parallel can be engaged so as to cross the binding threads.

Fig.16 illustrates an example of another fiber-reinforced material to be used for the present invention.

These fiber-reinforced materials 10, 10a form a holding sheet 6 in a net or mesh form from the warp 6a constituted of twine and braid and the weft constituted of non-twisted multi-filament threads, and are formed by inserting the fiber filament bundles 5, which are soft-twisted 40 times/m to this holding sheet 6, in parallel between each two warp 6a, 6a, also so as to distribute up and down the non-twisted multi-filament threads. Such a constitution makes it possible to deviate the bundle of fiber filaments 5 between two pieces of warp 6a, 6a.

Moreover, in the example shown in Fig.16, a net- or mesh-form sheet is used for the holding sheet, however, instead of this, a resin sheet or a non-woven fabric sheet can be used by arranging a plurality of fiber filament bundles 5 on the surface and pasting them thereon. Moreover, the holding sheet of the resin sheet and the non-woven fabric sheet may be used only on one side, and also the fiber filament bundles 5 can be held between two sheets.

As described above, in the first to the third connection methods according to the present invention, the outer layers are cut off from the ends of the plastic pipes to be connected; also the fiber-reinforced materials are re-wound or cut off to expose the inner layers; and only the inner layers are butt-fused to each other with the fiber-reinforced materials kept away. Therefore, the butt-fused part can surely be sealed without letting the fiber-reinforced materials mix in the fused part. According to the first and second connection methods, when the inner layers have been butt-fused to each other, another fiber-reinforced material is wound spirally or perpendicular to the axial direction of the pipe so as to lie across the ends of both pipes. Therefore, the connection part can be provided with strength equal to or larger than that of the main body part (unconnected part) of the plastic pipes.

Moreover, according to the fourth connection method, the outer layers are cut off from the ends of the plastic pipes to be connected; also the fiber-reinforced materials are inverted to expose the inner layers. The butt-fusing is carried out only between the inner layers to each other with fiber-reinforced materials kept away; therefore, the connection part can surely be sealed without letting the fiber-reinforced materials mix in the butt-fused part. Further, when the inverted fiber-reinforced materials are returned again onto the outer peripheral surfaces of the inner layers after the inner layers have been butt-fused to each other, a sheet layer in which the fiber-reinforced materials impregnated with a resin are arranged in the axial direction of the pipes or a resin plate is arranged inside or outside of the outer peripheral surfaces of the inner layers so as to lie across the ends of both pipes, therefore, the connection part can be provided with strength equal to or larger than that of the main body part (unconnected part) of the plastic pipes.

### Industrial Applicability

The connection methods and structures can effectively be utilized for connecting the plastic pipes for transporting high pressure liquids and also connecting those for drawing up deep sea water.

## Claims

1. A method for connecting, to each other, ends of the plastic pipes having a spirally wound fiber-reinforced material inserted between a tubular inner layer and a tubular outer layer formed of resin, comprising the steps of, cutting off the outer layer from the ends of both pipes, unwinding said fiber-reinforced material to expose the inner layer, butt-fusing the inner layers to each other, re-winding said unwound fiber-reinforced material on the outer peripheral surfaces of the inner layers, and winding spirally or perpendicularly to a pipe axis another fiber-reinforced material on the outer peripheral surfaces thereof so as to lie across the ends of both pipes.

2. A method for connecting, to each other, ends of the plastic pipes having a spirally wound fiber-reinforced material inserted between a tubular inner and a tubular outer layer formed of resin, comprising the steps of, cutting off the outer layer and said fiber-reinforced material from the ends of both pipes to expose the inner layer, butt-fusing the inner layer to each other, and winding spirally or perpendicularly to a pipe axis another belt-like fiber-reinforced material on the outer peripheral surfaces thereof so as to lie across the ends of both pipes.

3. A method for connecting, to each other, ends of the plastic pipes having a spirally wound fiber-reinforced material inserted between a tubular inner layer and a tubular outer layer formed of resin, comprising the steps of, cutting off the outer layer from the ends of both pipes, unwinding said fiber-reinforced material to expose the inner layer, butt-fusing the inner layers to each other, and rewinding said unwound fiber-reinforced material on the outer peripheral surfaces of the inner layers.

4. The connection method of plastic pipes as claimed in claim 1, 2 or 3, **characterized in that** the outer peripheral surface of a reinforcing layer of said fiber-reinforced material wound on the outermost side is covered with a resin layer.

5. The connection method of plastic pipes as claimed in claim 1, 2 or 3, **characterized in that** the inner and outer layers are formed of a thermoplastic resin.

6. The connection method of plastic pipes as claimed in claim 5, **characterized in that** the thermoplastic resin is polyethylene.

7. The connection method of plastic pipes as claimed in claim 1, 2 or 3, **characterized in that** said fiber-reinforced material is para-series all aromatic polyamide fiber, poly-P-phenylene-benzvisoxasolefiber, liquid crystalline polyester fiber, carbon fiber, or glass fiber.

8. The connection method of plastic pipes as claimed in claim 1, 2 or 3, **characterized in that** said plastic pipes have a nominal diameter of 50cm or larger.

9. A method for connecting, to each other, ends of the plastic pipes having a fiber-reinforced material inserted between a tubular inner layer and a tubular outer layer formed of resin so that the material is arranged substantially in the axial direction of the pipe, comprising the steps of, cutting off the outer layer from the ends of both pipes, inverting said fiber-reinforced material to expose the inner layer, butt-fusing the inner layers to each other, and then returning said inverted fiber-reinforced material again to the outer peripheral surfaces of the inner layers, and when returning the fiber-reinforced material again at least either on the inner or the outer side thereof, arranging a sheet layer or a resin plate, in which a fiber-reinforced material impregnated with resin is arranged in the axial direction, so that the sheet layer or the resin plate lies across the ends of both pipes.

10. The connection method of plastic pipes as claimed in claim 9, **characterized in that** a connection part is covered with a resin layer on the outermost peripheral surface.

11. The connection method of plastic pipes as claimed in claim 9, **characterized in that** the inner layer and the outer layer are formed of a thermoplastic resin.

12. The connection method of plastic pipes as claimed in claim 11, **characterized in that** the thermoplastic resin is polyethylene.

13. The connection method of plastic pipes as claimed in claim 9 or 10, **characterized in that** said fiber-reinforced material is para-series all aromatic polyamide fiber, poly-P-phenylene-benzvisoxasolefiber, liquid crystalline polyester fiber, carbon fiber, or glass fiber.

14. The connection method of plastic pipes as claimed in claim 9 or 10, **characterized in that** said plastic pipes have a nominal diameter of 50cm or larger.

15. A structure for connecting, to each other, ends of the plastic pipes having a spirally wound fiber-reinforced material inserted between a tubular inner layer and a tubular outer layer formed of resin, comprising the structure of, cutting off the outer layers from the ends of both pipes, butt-fusing the inner layers to each other, and winding spirally or perpendicularly to a pipe axis another fiber-reinforced material on the outer peripheral surfaces of the butt-fused inner layers in the presence of said fiber-reinforced material or in the cut-off state thereof so as to lie across the ends of both pipes.

16. A structure for connecting, to each other, ends of the plastic pipes having a spirally wound fiber-reinforced material inserted between a tubular inner layer and a tubular outer layer formed of resin, comprising the structure of, cutting off the outer layers from the ends of both pipes, butt-fusing the inner layers to each other, and spirally winding said fiber-reinforced material on the outer peripheral surfaces of the butt-fused inner layers.

17. The structure for connecting of the plastic pipes as claimed in claim 15 or 16, **characterized in that** a resin layer is covered on the outer peripheral surface of the reinforcing layer of the fiber-reinforced material wound on the outermost surface.

18. A structure for connecting, to each other, ends of the plastic pipes having a spirally wound fiber-reinforced material inserted between the tubular inner layer and a tubular outer layer formed of resin so that the material is arranged substantially in a axial direction of the pipe, comprising the structure of, cutting off the outer layers from the ends of both pipes, butt-fusing the inner layers to each other, and at least either on the inner or the outer side of said fiber-reinforced material, arranging a sheet layer or a resin plate, in which a fiber-reinforced material impregnated with resin is arranged in the axial direction, so that the sheet layer or the resin plate lies across the ends of both pipes.

19. The structure for connecting the plastic pipes as claimed in claim 18, **characterized in that** the outermost peripheral surface of the connection part is covered with a resin layer.
